(19) Europäisches Patentamt

European Patent Office

Office européen des brevets

(11) **EP 1 498 243 A1**

(12) **EUROPEAN PATENT APPLICATION**
published in accordance with Art. 158(3) EPC

(43) Date of publication:
**19.01.2005 Bulletin 2005/03**

(51) Int Cl.⁷: **B28D 5/00**

(21) Application number: **03708570.1**

(22) Date of filing: **12.03.2003**

(86) International application number:
**PCT/JP2003/002961**

(87) International publication number:
**WO 2003/076151 (18.09.2003 Gazette 2003/38)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **12.03.2002 JP 2002066934**

(71) Applicants:
• **Mitsuboshi Diamond Industrial Co., Ltd.**
  **Suita-city, Osaka Pref. 564-0044 (JP)**
• **Nagasaki Prefectural Government**
  **Nagasaki-shi, Nagasaki 850-8570 (JP)**

(72) Inventors:
• **MORITA, Hideki;**
  **c/o Ind. Tech. Center of Nagasaki**
  **Ohmura-shi, Nagasaki 856-0026 (JP)**

• **OTSU, Y.;**
  **c/o MITSUBOSHI DIAMOND IND. CO., LTD**
  **Suita-city,Osaka 564-0044 (JP)**
• **EDA, Tatsuo;**
  **c/o MITSUBOSHI DIAMOND IND. CO., LTD**
  **Suita-city,Osaka 564-0044 (JP)**

(74) Representative:
**Leson, Thomas Johannes Alois, Dipl.-Ing.**
**Patentanwälte**
**Tiedtke-Bühling-Kinne & Partner,**
**Bavariaring 4**
**80336 München (DE)**

(54) **METHOD AND DEVICE FOR PROCESSING FRAGILE MATERIAL**

(57)    Setting in advance an absorptance of a light L (for example laser light) of a brittle material W to be processed, an absorptance of a plate-shaped sample S of the same material as the brittle material W to be processed is calculated using that set value of absorptance, a thickness of the tabular sample S when that sample S is irradiated by the light L having a same wavelength as that irradiated onto the brittle material, and based on this calculated value of absorptance, and the actual absorptance data obtained by the actual irradiation of the light L on the sample S, a light wavelength that is selected appropriate for the absorptance of the brittle material to be processed is selected, and processing of the brittle material W is carried out using light of the selected wavelength.

FIG.1

## Description

## TECHNICAL FIELD

The present invention relates to a method and an apparatus for processing brittle materials such as glass, ceramics or semiconductor wafers.

## BACKGROUND ART

It is known that when laser light from a laser light source irradiates the surface of a brittle material to be processed, heating distortions due to the changes in heating and cooling generated at this time can be used to process the brittle material.

For example, a processing method of the brittle material is disclosed in JP H3-13040B in which the brittle material is cleaved by guiding a crack formed at the start of the processing of the brittle material along a processing line by the heat strain of laser light irradiation. Further, in Tokuhyo H8-509947 (JP3027768) a brittle material cutting method is disclosed, making use of a crack from the surface of the material to a predetermined depth that is formed by the generation of heat strain by laser light irradiation onto the brittle material.

Representative laser light sources used in this type of processing that are commercially available include gas lasers such as HF lasers with an emission wavelength of 2.9 $\mu$m, CO lasers with an emission wavelength of 5.5 $\mu$m, and CO$_2$ lasers with an emission wavelength in the region of 10 $\mu$m and the like. Furthermore, solid-state lasers such as ruby lasers or semiconductor lasers or the like, which emit a variety of wavelengths, are commercially available.

Of the laser light sources available commercially, laser light with wavelengths in the region of 1 to 3 $\mu$m is used for processing brittle materials such as semiconductor wafers of silicon and the like, while laser light of wavelengths in the region of 5 to 10.6 $\mu$m is used in the processing of brittle materials such as glass and the like. Furthermore, various ceramic materials are processed using laser light with wavelengths in the region of 1 to 10.6 $\mu$m. It should be noted that laser light processing is also applied to the processing of metals.

However, according to the processing methods disclosed in JP H3-13040, Tokuhyo H8-509947 (JP3027768) and others, no particular consideration is given with respect to the selection of the wavelength of the laser source used, and it is more often the case that the wavelength of the irradiated laser light is not at the optimum absorptance wavelength to sufficiently absorb that heating energy within the material to be cut. Because of this, temperature increases within the material rely only on thermal conduction from heated portions at the surface of the material, and because a long time is needed for temperature elevation, a long time is necessary for laser light irradiation, and an increase in the speed of the process is not possible. A separate problem that occurs when irradiation time is lengthened is the problem that it is difficult to obtain an accurate scribe line if, before the inside of the material reaches the temperature necessary for the process (crack formation), the surface temperature of the material near the irradiating portion approaches or exceeds the material melting point, melting the vicinity of the material surface. It should be noted that in the method disclosed in Tokuhyo H8-509947 (JP3027768), there is also a problem that cracks cannot be formed deep inside the material, because a lot of time is taken to heat the interior of the material to a sufficient temperature.

Here then, a number of process methods considering the wavelength of laser light have been suggested. In USP 5,138,131 for example a process method is disclosed for irradiating glass with laser light in a region in which a wavelength region (at least 4 $\mu$m) with a transmittance close to zero was selected following measurement of the laser light transmittance of the glass to be processed to ensure the laser light is sufficiently absorbed by the glass to be processed.

However, in this process method, because the absorptance of the process material with respect to the wavelength of the laser light is so excessively large, most of the irradiated laser light is absorbed near the surface of the material and direct heating by the irradiated laser light reaches a depth of no more than a few $\mu$m from the material surface. Because of this, only the material close to the surface is heated, and the only energy reaching inside the material is that which is changed by absorptance at the material surface from light energy to heat and transmitted by thermal conduction. As a result a time lag is generated corresponding to the time for thermal conductance from the time of heating the surface vicinity to the time the interior is sufficiently heated. This is to mean that in the interior, there is a delay in crack generation formed by thermal distortion.

Further, because the surface vicinity of the material is intensely heated, in the vicinity of the surface on which the energy of the irradiated laser light is concentrated, the above given time lag is compounded and it is heated up more than necessary. In a worst case scenario, one portion will be heated to a temperature near its melting point, which may effect the quality of the processed material after cutting. Even further, to make up for a reduction in the cutting speed because of the delay in the heating time, the necessity will also emerge to rapidly transport to the internal material portion a large quantity of heating energy by irradiating the material with laser light from a laser source with higher power.

## DISCLOSURE OF INVENTION

In view of this situation, it is an object of the present invention to provide a method and an apparatus for processing brittle material at a fast process speed.

The process method of the present invention is a method for processing brittle material by irradiating light from a light source serving as a heating source onto the brittle material and moving an irradiation position of the light along a predetermined line, wherein an absorptance of the light irradiated onto the brittle material to be processed is set in advance, wherein the absorptance of a plate-shaped sample of a material that is the same as the brittle material to be processed when irradiated by a light of the same wavelength as that irradiated on the brittle material is calculated, using that set value of absorptance, and a thickness of the sample, and wherein a wavelength of light for the absorptance of the processed brittle material is selected, based on that calculated value of absorptance, and actual absorptance data obtained by actually irradiating a light onto the sample.

In the processing method of the present invention, it is also possible the sample is irradiated in sequence by a plurality of light sources with mutually different wavelengths, wherein the actual absorptance data of the sample is calculated from a measured value of transmitted light intensity at each wavelength, and wherein the wavelength of the light is selected using this actual data.

In the processing method of the present invention, it is also possible to form a reflective layer on a rear side of a light irradiating position of the processed brittle material. Further, it is also possible, when the brittle material is placed on a table and processed, a reflective layer of that table on which the material is placed is formed on a surface.

The details of the calculation process (calculation to select the laser light wavelength) to carry out the process method of the present invention are given below.

It should be noted that, in the case of an actual brittle material, there may be reflection at the material surface on which the light is incident, and there may be reflection at a rear surface of the material, which is the transmission surface for transmission from the inside of the material through the emission surface. However, at this point in order to simplify the discussion, it is assumed that the reflection at the light incident portion or transmission portion of this material is small, in this discussion and can be ignored.

Also, if the brittle material is used as a cut panel material for displays, there may be surface processing on the reverse side of the incident surface for forming different kinds of drive or control circuits for screen display or control. Also in this case, in order to simplify the discussion, it will be assumed that the light is incident on and passes through portions not subjected to surface processing, and is not affected by surface processed portions.

First, when the object is irradiated in a vacuum by light of a wavelength $\lambda_0$ and an intensity $I_0$, the intensity I at a depth z can be expressed by $I = I_0 \exp(-\alpha z)$. Here, $\alpha$ is a physical value known as absorbency which can be expressed as $\alpha = (4\pi / \lambda_0) k = (4\pi / \lambda_0) n \kappa$, where, n is the refractive index of the body, and k and $\kappa$ are decay coefficients.

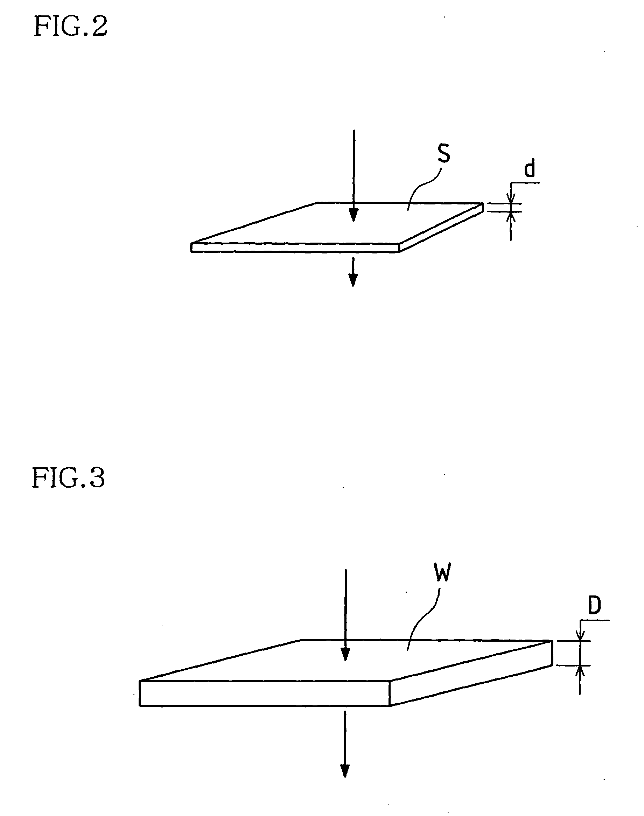

As shown in FIG. 2, when laser light (intensity $I_0$) of known wavelength is irradiated onto a plate-shaped sample S of thickness d, which is made of the same material but is a number of times thinner than the brittle material to be processed, if the laser light is absorbed by A% within the sample S, the following relationship applies.

$$(1) \qquad \frac{I_0 - I}{I_0} = \frac{A}{100}, \ I = I_0 \exp(-\alpha \, d)$$

$$(2) \qquad \frac{I}{I_0} = \frac{100 - A}{100} = \exp(-\alpha \, d)$$

$$(3) \qquad (\frac{100 - A}{100})^{1/d} = \exp(-\alpha)$$

Further, as shown in FIG. 3, if the transmittance of an emitted light intensity I' becomes B% when a brittle material W of a thickness D is irradiated by light of the same wavelength as that irradiated onto the sample S, the following relationship applies.

$$I' / I_0 = \exp(-\alpha \, D) = B / 100$$

Using eq (3), $\exp(-\alpha \, D) = ((100 - A)/100)^{D/d} = B / 100$

$$(4) \qquad (100 - A) / 100 = (B / 100)^{d/D}$$

$$100 - A = 100 \, (B / 100)^{d/D}$$

$$= (100)^{D/d} \, (100)^{d/D} \, (B/100)^{d/D}$$

$$= (100)^{D/d} \, B^{d/D}$$

$$(5) \qquad \therefore \ A = 100 - (100)^{D/d} \, B^{d/D}$$

And, using the above equations and the actual data of the transmitted light intensity through the plate-shaped sample S of thickness d, the optimum wavelength of laser light for the brittle material to be processed can be selected. This method will be explained in detail below.

First, the percentage absorptance of the irradiated laser light that is best for carrying out the process is decided with respect to the brittle material to be processed being a thickness D.

Now, if a percentage B% is determined as the absorptance, the absorptance that this corresponds to can be calculated based on the equation (5) given above when laser light that is the same as the processing laser light is irradiated on to a sample of thickness d which is of the same material as the material to be processed. The results of this calculation are taken as absorptance A%.

Next, the wavelength region at which the closest value of absorptance (actual data) to the above calculated absorptance A% is attained is determined by irradiating the sample S of a thickness d with actual laser light. More specifically, either the sample S will be irradiated by laser light with a changing wavelength or it will be irradiated by a plurality of laser light types with differing wavelengths. Next, by calculating the actual absorptance of the sample S using actual transmitted light intensity data obtained at each wavelength by the irradiation of laser light using the above-noted Equation (1), and comparing this actual absorptance (actual data) with the absorptance A% calculated above, the value of laser light wavelength that corresponds to the absorptance A% can be found.

With the above processing, it is possible to select a laser light wavelength close to the wavelength that is optimal for the absorptance characteristics of the brittle material to be processed.

By this laser selection, it is possible to increase the process speed over that of the conventional process. The reasons for this are described below.

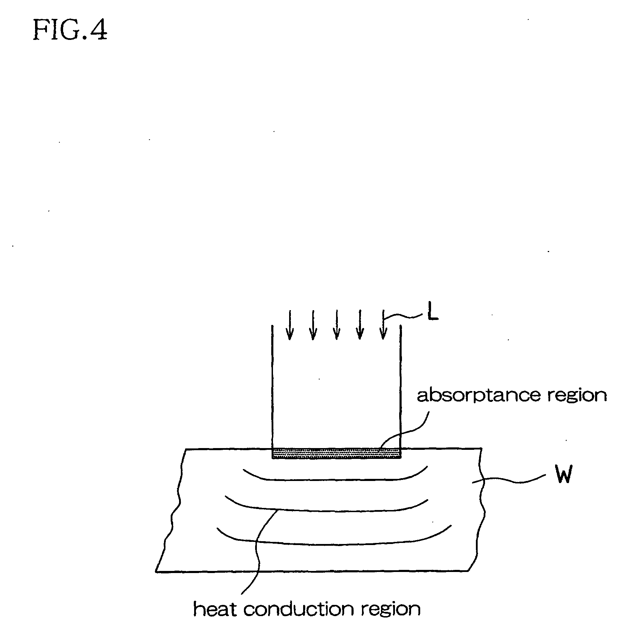

Firstly, when the selection of laser light wavelength is inappropriate, there are cases in which the absorptance within the material to be processed is 0%, and most of the energy is transmitted without being absorbed. Conversely, when the absorptance within the material is close to 100%, the laser light L irradiated onto the brittle material W is absorbed near the surface of the brittle material W as shown in FIG. 4. As such, although the surface portion of the brittle material W will be instantly heated, as the internal temperature of the internal portion of the material is elevated by thermal conduction, the temperature rise of the internal material portion will be delayed by the amount of time necessary for heat to be conducted.

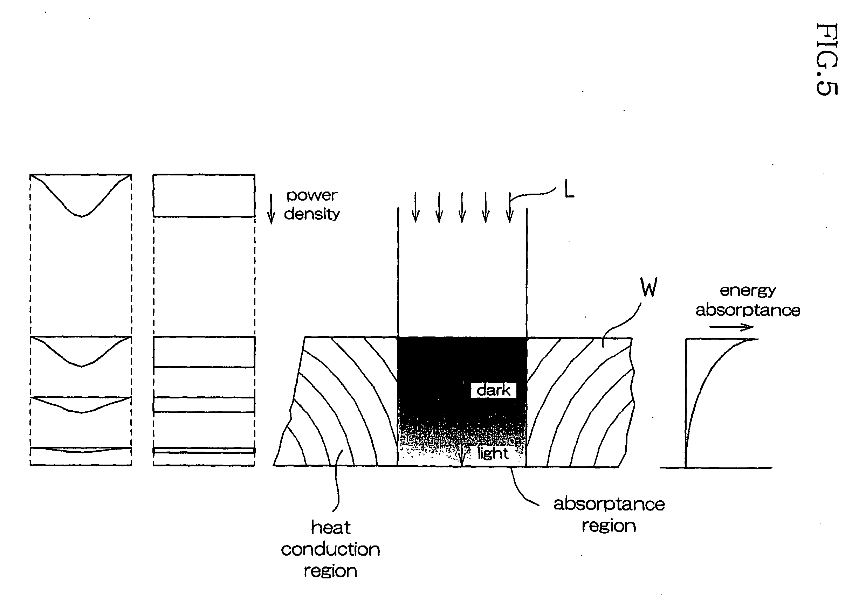

As opposed to this, if a laser light is selected whose wavelength is close to the optimum absorptance wavelength of the brittle material to be processed as in the process method of the present invention, then the region of the internal material portion and surface vicinity of the brittle material becomes the absorbing region by the irradiation of the laser light L onto the brittle material W as shown in FIG. 5, and a large volume of material can be simultaneously heated. Thus, the brittle material W can be heated in the surface vicinity substantially simultaneously to heating of the internal material portion, and the necessary temperature increase obtained within a short time, as the internal material portion heating can be completed with the only delay caused by the speed of light propagation. As a result, the process speed can be accelerated. Further, because thermal distortion is generated deep into the internal portion from the surface vicinity of the brittle material, it is possible to form cracks deep in the internal portion of the brittle material W.

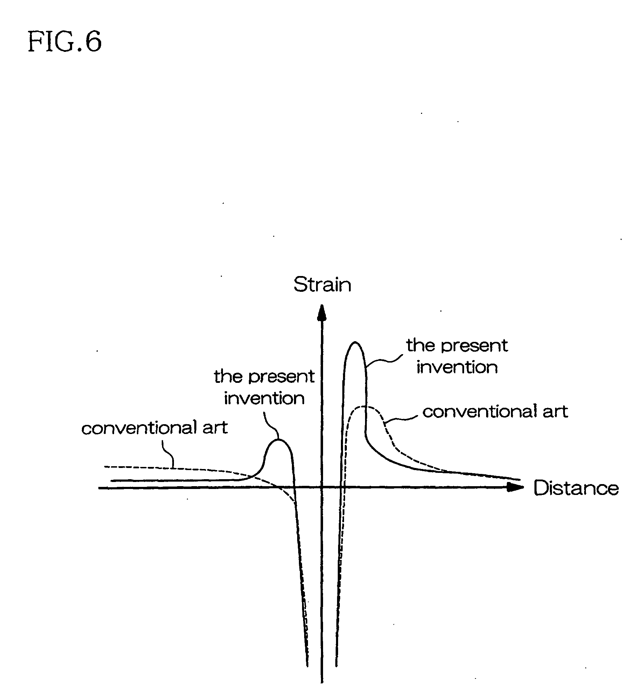

Even further, as shown in FIG. 6, the change in thermal strain (unbroken line) generated by temperature increase in the vicinity of the heating point is much greater than when selection of the laser light wavelength is inappropriate (conventional processing method: broken line), and as a result of the thermal strain being concentrated in a narrow region in the material, the strength of the thermal strain also increases.

Here, in the present invention, consideration was given that achieved a heating method reducing the temperature gradient between the internal portion and the material surface portion that is irradiated, thus allowing the generation of a relatively small uniform heating band in the thickness direction. For example by preheating the process material to a predetermined temperature, or using a light source with a small light absorptance in the material thickness direction will allow a condition in which the thermal gradient in the thickness direction becomes small. Consequently, when a variety of materials are subjected to the cutting process, there may be more materials appropriate for a cleaving process using a light of a wavelength with a small absorptance. In certain cases, even where a portion of the energy is transmitted through the material, there is no problem with cuttability itself. Also useful are methods in which a reflective layer is formed on a bottom surface or a table surface of the like and the incident light is reflected from the bottom surface or the table surface. It is possible to generate a comparatively uniform heating zone in the thickness direction by employing this type of method.

In the present invention, it is possible by changing the wavelength of the irradiated light (in other words by changing the absorptance inside the process material) to control the depth of the crack obtained during processing. Further, it becomes possible to cut the process material with an inclined surface by inclining the irradiation angle to approach one face of the irradiated surfaces, on either side of the scanning direction of the irradiating light. Even with this cut face, a smooth face is obtainable that requires no further surface chamfering after cutting just like a normal cut face.

In the current invention, if the irradiated energy permeates sufficiently into the depths of the material by the formation of an appropriate reflecting layer of a predetermined irradiation position on the reverse surface side of the process material or the surface of the table on which the material is placed, then effective use can be made of the present invention for full body cuts in which the process is carried out by letting a crack permeate from the surface to the rear side.

Further, the present invention has the characteristic that the irradiating heat of the laser light below the irradiated portion is absorbed faster than the heat delivered by conduction. As a result, when irradiating the laser beam at a predetermined irradiation angle toward the surface of the brittle material to be processed, cracks are formed internally that are inclined at a predetermined angle from the surface, so that there is the advantage that the degree of freedom of the process is increased.

A processing apparatus according to the present invention, is suitable to carry out the method for processing brittle material having the above noted features, and includes: a plurality of light sources emitting mutually different wavelengths of light, a scanning means for transporting these light sources relative to the brittle material, an absorptance calculating means for calculating, using a set value of absorptance set in advance and a thickness of a sample, an absorptance of the sample when irradiated by a light of the same wavelength as that irradiated on the brittle material, a light intensity measuring means for measuring intensity of transmitted light when the sample is irradiated by light from each light source, an actual data calculating means for calculating actual absorptance data of the sample from the measured value of the transmitted light intensity at each wavelength as measured by the light intensity measuring means, and a selecting means for selecting a wavelength of light that is appropriate for the absorptance of the brittle material to be processed based on the actual absorptance data and the calculated results of absorptance, and wherein a light source emitting light of this selected light source is selected from the plurality of light sources to process the brittle material.

In the present invention, the light intensity $I_0$ in the vicinity of the material surface is pre-measured at the step before processing using the light intensity measuring means. After this, the absorptance is calculated for the internal portion of each material, by measuring the intensity of transmitted light at the reverse face of the sample and the processed material and comparing it with $I_0$.

By the irradiation of light (laser light and the like) from a light source, the present invention is applicable to cutting processes, whereby a deep crack is formed in the brittle material, or cleaving processes, whereby the brittle material is completely split on the left and right of a process line (the scribe line) using only irradiated light.

Further there is no particular limitation regarding the light serving as a heating source in the present invention, as long as it is light of a wavelength which is changed to heat in the internal portion of the material and not absorbed completely at the material surface, and in addition to laser light, light having various wavelengths such as visible light, UV light or the like or light sources combining a plurality of lasers of different wavelengths can be suggested, and by using these light sources and processing using the heating method which reduces the temperature gradient between the interior and the surface of the irradiated portion of the material, it is possible to obtain the characteristic points of an increase in speed and accuracy and inclined cleaving. As for light sources other than laser light, it is possible to use ultraviolet lamps or infrared lamps, and for laser light, white lasers may also be applicable.

Still further, light sources other than single wavelength generating laser light sources, heat and light sources radiating a plurality of wavelengths, like infrared lamps such as heating lamps and the like may be included as the light source used in the present invention, however to simplify the description of the above explanation, the heat sources have been explained with the example of a laser light source that generates a single wavelength.

If a heating lamp is used from within the many products available on the market, the data related to the spectral characteristics of those products can be obtained from the manufacturer, or it can be obtained by a measurement.

When using this kind of light source which radiates light including a plurality of wavelength components, then an estimate of the absorptance and the transmission can be obtained by focusing on those spectral components of the wavelength components included in the light from the light source whose optical intensity is strongest or on wavelength components with comparable strength, and measuring the intensity of the light components of a predetermined wavelength band.

One example of such a method is to use a sample of the material to be processed having a predetermined thickness and collect data relating to the light absorptance characteristics and transmittance when light from various light sources is irradiated onto that sample.

## BRIEF DESCRIPTION OF DRAWINGS

FIG. 1 is a diagram schematically showing the configuration of the embodiment of the present invention.

FIG. 2 is a schematic view showing how a plate shaped sample of thickness d is irradiated with laser light.

FIG. 3 is a schematic view showing how a brittle material of thickness D is irradiated with laser light.

FIG. 4 is a drawing showing schematically a situation in which only the surface vicinity of the brittle material is heated by laser light irradiation.

FIG. 5 is a diagram illustrating the action of the present invention and showing schematically the condition when the regions of the surface vicinity and internal portion of the brittle material are simultaneously heated by irradiation by laser light.

FIG. 6 is a diagram illustrating the action of the present invention and showing changes in the size of thermal strain generation with respect to temperature increase in the region of a heating spot.

## BEST MODE FOR CARRYING OUT THE INVENTION

The following is an explanation of an embodiment of the invention, based on the drawings.

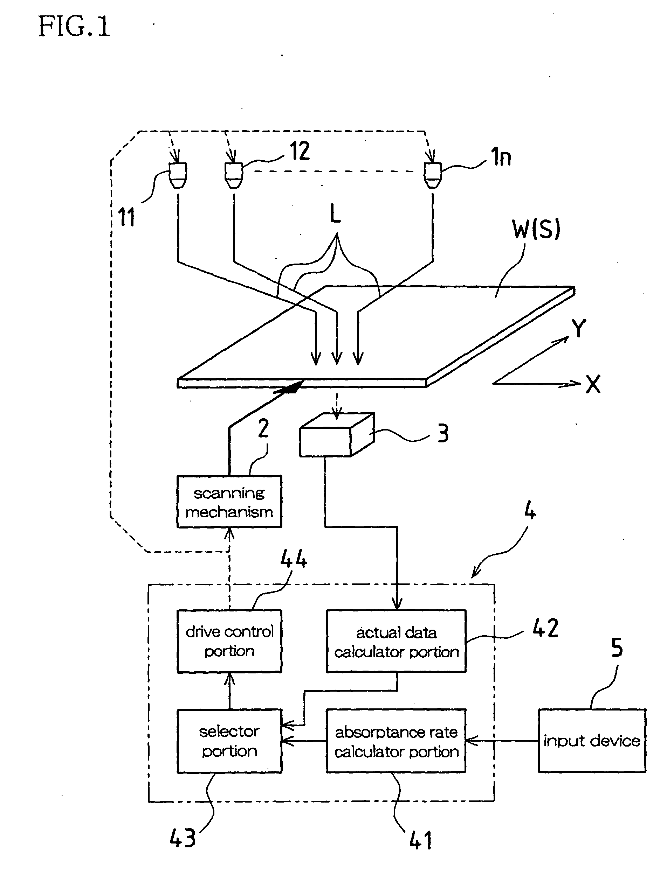

FIG. 1 is a diagram showing schematically the structure of the embodiment of the present invention.

The processing apparatus in FIG. 1 is provided with a plurality of laser light sources 11, 12 ... 1n, generating mutually different wavelengths. For these laser light sources 11, 12 ... 1n, various types of lasers, including semiconductor lasers, gas lasers, solid state lasers or excimer lasers, or the like can be utilized.

It should be noted that, if semiconductor lasers are used as the laser light sources 11, 12 ... 1n, there is no particular problem with the arrangement of each laser light source (component), however if a plurality of gas lasers, solid state lasers, excimer lasers or others are used, because the shape and dimensions of the laser light source will become large, it is possible that there may be difficulties arranging all the plurality of the laser light sources in the space above the brittle material W to be processed. In such a case, a laser light L can be guided from the position where the plurality of laser light sources 11, 12 ... 1n are installed to the surface of the brittle material W to be processed using an optical means such as optical fibers or the like.

The brittle material W to be processed is transported in the X and Y directions by a scanning mechanism 2, such as an x-y table. The brittle material W is irradiated by the laser light L from a laser light source 11 (or 12 ... 1n) which is one of the plurality of laser light sources 11, 12 ... 1n. The selection and driving of the laser light source 11 (or 12 ... 1n) and drive control of this scanning mechanism 2 is performed by a data processing device 4, as explained later.

A light intensity measuring device 3 is arranged below the plurality of laser light sources 11, 12 ... 1n (below the brittle material W). The light intensity measuring device 3 is a device for measuring the intensity of transmitted laser light L irradiated from each of the laser light sources 11, 12... 1n onto a sample S, described below. A measured value from the light intensity measuring device is taken up by the data processing device 4.

The data processing device 4 includes for example an absorptance calculator portion 41, an actual data calculator portion 42, a selector portion 43 and a drive control portion 44. Connected to the data processing device 4 is an input device 5 in order to input the set values of process shape data, thickness of the brittle material W to be processed, a thickness of the sample S, and an absorptance of the laser light L for example.

The absorptance calculator portion 41 calculates the absorptance of a sample S when it is irradiated by laser light L of the same wavelength as that irradiated onto the brittle material W to be processed using the set values of the thickness of the brittle material W to be processed, the thickness of the sample S and the absorptance input by operation of the input device 5. Specifically, by substituting the values of a thickness D of the brittle material W, a thickness d of the sample S and a set absorptance value B% into the previously defined equation (5), it calculates an absorptance A% of the sample S.

The drive control portion 44 is provided with a process mode, whereby processing is actually carried out, and a test mode, which drives each of the laser light sources 11, 12... 1n in order when set by the operation of the input device 5.

When the sample S is irradiated by the laser light L from each of the laser light sources 11, 12 ... 1n, the actual data calculator portion 42 calculates the actual sample S absorptance data from a measured light transmittance value, measured at each wavelength by the light intensity measuring device 3. It should be noted that the calculation of the actual absorptance data uses the equation (1) described above.

The selector portion 43 compares the absorptance A% of the sample S as calculated by the absorptance calculator portion 41 with the plurality of actually measured absorptance data points calculated by the actual data calculator portion 42, and, by a process of finding actual data which shows values matching or values close to the absorptance A% as calculated, selects the laser light source with a wavelength close to the absorptance A%.

And, when in process mode, the drive control portion 44, while driving only the one single laser light source 11 (or 12 ... 1n) selected by the selector portion 43 also controls the driving of the scanning mechanism 2 based on the process shape data. The laser light L scans the surface of the brittle material W to be processed by the drive control of these laser light sources 11 (or 12 ... 1n) and the scanning mechanism 2.

Next, the processing procedure of the brittle material W will be explained.

First, the plate-shaped sample S which is of the same material but with a thickness of a fraction of the brittle material W (W/n [n: several]) to be processed is prepared.

Using the input device 5, such data as process shape data, the thickness d of the sample S and the thickness D of the brittle material W to be processed are entered into the processing device 4. Furthermore, it is decided what the absorptance (in%) of the laser light irradiated onto the brittle material of the thickness D should be, and the data processing device 4 is set to this determined value B%.

Next, the sample S is arranged above the light intensity measuring device 3, and the data processing device 4 is switched to test mode. By this operation, the laser light sources 11, 12 ... 1n, are driven in order, the laser light L from each of the laser light sources 11, 12...

1n is irradiated onto the sample S, and by each turn of laser light irradiation the measured intensity of transmitted light of the sample S as measured by the light intensity measuring device 3 is taken up by the data processing device 4.

When the measured light transmittance intensities of the laser light L from all the laser light sources 11, 12 ... 1n have been collected, the data processing device 4 carries out the calculation of the above absorptance A % of the sample S and that of the actual absorptance data of sample S, and from the results selects from within the plurality of the laser light sources 11, 12 ... 1n that laser light source 11 (or 12 ... 1n) which is closest to the optimum wavelength for the absorptance characteristics of the brittle material W to be processed.

After completion of the above processing, the brittle material W to be processed is arranged below the laser light source 11, 12... 1n, and the data processing device 4 is switched to process mode. Thus, the data processing device 4 drives the laser light source 11 (or 12 ... 1n) selected in the above process, and by drive controlling the scanning mechanism 2 based on the process shape data processes the brittle material W into a predetermined shape.

Here, by the irradiation of the laser light L from the laser light sources 11, 12 ... 1n, this embodiment makes possible the processes of either a cutting process which creates deep cracks within the brittle material W, or a cleaving process in which the brittle material is completely split by propagating cracks created in the brittle material W at the start of processing.

In the above embodiment, the example given shows an arrangement of a plurality of laser light sources, however the present invention is not limited to this, and a free electron laser able to emit different wavelengths can also be used for example.

If a free electron laser is used then the laser light wavelength selection process may be a process of determining the wavelength region in which the absorptance is at an optimal condition by altering continuously the laser light wavelength while irradiating the sample S with the laser light from the free electron laser. And, after the optimum wavelength region has been determined, it is also possible to carry out processing of the brittle material by selecting the laser light source which generates laser light having a wavelength included within, or close to the optimum wavelength. It should be noted that even after selection of the laser light wavelength, that is to say after measurement of the absorptance of the laser light, when it is possible to make use of a free electron laser apparatus, it is also possible to process the brittle material with laser light irradiation with the generated wavelength of the free electron laser set to a value close to the optimum wavelength found by absorptance measurement.

It should be noted that, as a light source serving as a heating source, it is also possible to utilize, other than laser light, a variety of light sources such as ultraviolet lamps or infrared lamps or the like, which emit light of various wavelengths such as visible light or UV light for example.

Furthermore, if the amount of energy transferred from the light source to the process material is large, an appropriate transmittance means minimizing energy loss at time of transmittance can be selected instead of optical fibers to realize the object of the invention. Concrete examples of such a concrete transmittance means include low transmission loss hollow optical fibers and hollow waveguides and the like (Matsuura Y. and Miyagi M: Applied Physics, vol. 68, pp. 41 - 43, 1993, and Applied Physics, vol. 62, pp. 44 - 46, 1993).

## INDUSTRIAL APPLICABILITY

According to the present invention, the internal material portion temperature increase is faster than in the conventional art which heats only the surface vicinity and as a result of obtaining the necessary temperature increase in less time, is advantageous because of the possibility to increase process speed.

Further, because cracks generated by the light irradiation are such that they extend to reach the opposite surface after passing through the internal portion from the material surface, the cracks form deep within the internal material portion and thus the breaking process and separation work after laser scribing becomes simplified.

Moreover, although it depends on the thickness of the material, with just the light irradiating process it becomes possible to increase the speed of the cleaving process during which the brittle material is separated completely along both sides of the scribe line. Thus, it is no longer necessary to employ a breaking process where there is high cullet generation as downstream processing, so it becomes possible to carry out the scribing and splitting work in a single process with no relation to cullets.

## Claims

1. A method for processing brittle material by irradiating light from a light source serving as a heating source onto the brittle material and moving an irradiation position of the light along a predetermined line,

   wherein an absorptance of the light irradiated onto the brittle material to be processed is set in advance,

   wherein the absorptance of a plate-shaped sample of a material that is the same as the brittle material to be processed when irradiated by a light of the same wavelength as that irradiated on the brittle material is calculated, using that set value of absorptance, and a thickness of the sample, and

wherein a wavelength of light for the absorptance of the processed brittle material is selected, based on that calculated value of absorptance, and actual absorptance data obtained by actually irradiating a light onto the sample.

2. The method for processing brittle material according to claim 1,
   wherein the sample is irradiated in sequence by a plurality of light sources with mutually different wavelengths,
   wherein the actual absorptance data of the sample is calculated from a measured value of transmitted light intensity at each wavelength, and
   wherein the wavelength of the light is selected using this actual data.

3. The method for processing brittle material according to claim 1 or claim 2,
   wherein a reflective layer is formed on a rear side of a light irradiating position of the processed brittle material.

4. The method for processing brittle material according to claim 1 or claim 2,
   wherein when the brittle material is placed on a table and processed, a reflective layer of that table on which the material is placed is formed on a surface.

5. An apparatus for processing brittle material by irradiating light from a light source serving as a heating source onto the brittle material and moving an irradiation position of the light along a predetermined line, comprising;
   a plurality of light sources emitting mutually different wavelengths of light,
   a scanning means for transporting these light sources relative to the brittle material,
   an absorptance calculating means for calculating, using a set value of absorptance set in advance and a thickness of a sample, an absorptance of the sample when irradiated by a light of the same wavelength as that irradiated on the brittle material,
   a light intensity measuring means for measuring intensity of transmitted light when the sample is irradiated by light from each light source,
   an actual data calculating means for calculating actual absorptance data of the sample from the measured value of the transmitted light intensity at each wavelength as measured by the light intensity measuring means, and
   a selecting means for selecting a wavelength of light that is appropriate for the absorptance of the brittle material to be processed based on the actual absorptance data and the calculated results of absorptance, and
   wherein a light source emitting light of this selected light source is selected from the plurality of light sources to process the brittle material.

FIG.1

FIG.2

FIG.3

FIG.4

L

absorptance region

W

heat conduction region

FIG.5

FIG.6

## INTERNATIONAL SEARCH REPORT

| International application No. |
| --- |
| PCT/JP03/02961 |

**A. CLASSIFICATION OF SUBJECT MATTER**
Int.Cl$^7$ B28D5/00

According to International Patent Classification (IPC) or to both national classification and IPC

**B. FIELDS SEARCHED**

Minimum documentation searched (classification system followed by classification symbols)
Int.Cl$^7$ B28D5/00, B23K26/00

Documentation searched other than minimum documentation to the extent that such documents are included in the fields searched

| | | | |
| --- | --- | --- | --- |
| Jitsuyo Shinan Koho | 1926–1996 | Toroku Jitsuyo Shinan Koho | 1994–2003 |
| Kokai Jitsuyo Shinan Koho | 1971–1996 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 3-110095 A (Brother Industries, Ltd.), 10 May, 1991 (10.05.91), (Family: none) | 1-5 |
| A | JP 6-318675 A (Nippondenso Co., Ltd.), 15 November, 1994 (15.11.94), (Family: none) | 1-5 |
| A | WO 01/38242 A1 (Schott Spezialglas GmbH), 31 May, 2001 (31.05.01), & AU 7285400 A   & DE 19955824 A & JP 2003-514673 A | 1-5 |
| A | JP 3-13040 A (Kagasaki-Ken), 21 February, 1991 (21.02.91), (Family: none) | 1-5 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03 June, 2003 (03.06.03) | 17 June, 2003 (17.06.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)